# EUROPÄISCHE PATENTSCHRIFT

(11) **EP 4 311 254 B1**
(45) Veröffentlichungstag und Bekanntmachung des Hinweises auf die Patenterteilung: **18.11.2026**
(21) Anmeldenummer: 22186489.5
(22) Anmeldetag: 22.07.2022
(51) Int. Cl.: H04Q 9/00

(54) **VORRICHTUNG ZUR ÜBERWACHUNG ZUMINDEST EINES LAGEORTES**
DEVICE FOR MONITORING AT LEAST ONE STORAGE LOCATION
DISPOSITIF DE SURVEILLANCE D'AU MOINS UN EMPLACEMENT

(43) Veröffentlichungstag der Anmeldung: 24.01.2024
(73) Patentinhaber: Düperthal Sicherheitstechnik GmbH & Co.KG, 63791 Karlstein (DE)
(72) Erfinder: BACKHAUS, Frank, 32052 Herford (DE)
(74) Vertreter: Andrejewski - Honke Patent- und Rechtsanwälte Partnerschaft mbB

(56) Entgegenhaltungen:
- US-A1- 2009 109 040
- US-A1- 2013 181 829

## Beschreibung

Die Erfindung betrifft eine Vorrichtung zur Überwachung zumindest eines Lagerortes zur Aufbewahrung einer oder mehrerer Gefahrgüter wie beispielsweise Chemikalien oder Verbrauchsgüter und insbesondere zur Aufbewahrung von Batterien und mit Batterien ausgerüsteten Gegenständen wie beispielsweise Fahrzeugen, wobei das Gefahrgut mit wenigstens einem zugeordneten Sensor ausgerüstet ist und entsprechende Sensorsignale an eine Steuereinheit drahtlos übermittelt werden, und wobei der Sensor inklusive zugehöriger Sende-/Empfangseinheit zusammen mit einer korrespondierenden Energiequelle als das Gefahrgut identifizierender autarker und als wetterfestes Anbaumodul ausgelegter Knotenpunkt in einem lokalen drahtlosen Netzwerk ausgebildet ist.

Eine Vorrichtung und ein zugehöriges Verfahren zur Überwachung zumindest eines Lagerortes zur Aufbewahrung einer oder mehrerer Gefahrgüter werden in der EP 3 885 693 A1 der Anmelderin beschrieben. Hier geht es im Wesentlichen um ein Verfahren zum Erfassen von in Sicherheitsschränken gelagerten Produkten. Der Sicherheitsschrank definiert also den Lagerort. Als hierin gelagerte Produkte kommen im allgemeinen Gefahrstoffe zum Einsatz wie die im Stand der Technik beschriebenen Chemikalien, Feststoffe, Gase etc.

Neben solchen Gefahrgütern oder Gefahrstoffen kommt heutzutage zunehmend der Überwachung von Batterien und mit Batterien ausgerüsteten Gegenständen als entsprechende Gefahrgüter eine besondere Bedeutung zu. Das lässt sich darauf zurückführen, dass solche Batterien heutzutage überwiegend auf Lithiumionenbasis hergestellt werden und unter Umständen zur Selbstentzündung neigen. Aus diesem Grund müssen die betreffenden Gefahrgüter überwacht werden, beispielsweise im Hinblick auf die an oder in ihnen herrschenden Temperaturen. Sobald eine bestimmte Grenztemperatur im Beispielfall mithilfe eines Sensors ermittelt wird, kann der betreffende bekannte Sicherheitsschrank geschlossen werden.

Dazu ist das fragliche Gefahrgut mit dem angesprochenen Sensor ausgerüstet. Hierbei handelt es sich im Rahmen der bekannten Lehre um Sensoren, mit deren Hilfe Verbrauchswerte und typischerweise Massenabnahmen erfasst werden. Auch wird in diesem Zusammenhang bereits ein Infrarotsensor angesprochen, mit dessen Hilfe beispielsweise eine abweichende Temperatur einer im Innern befindlichen Batterie gegenüber dem Sicherheitsschrank als solchen erfasst werden kann.

Dadurch, dass die einzelnen Sicherheitsschränke unter anderem mit einem Computer und beispielsweise einem tragbaren Computer kommunizieren und in ein Netzwerk eingebettet sind, welches grundsätzlich auch drahtlos arbeiten kann, ist bereits eine Sicherheitsüberprüfung im Stand der Technik möglich.

Bei der EP 3 396 094 B1 der Anmelderin geht es um einen Sicherheitsschrank und vorzugsweise Batterieschrank zur Aufnahme und Lagerung von Hochleistungsbatterien wie Lithium-Ionenbatterien. Dabei ist ein Sensor im Schrankkorpus angeordnet und werden die Sensorsignale ausgewertet. Bei Überschreiten zumindest eines Schwellwertes und/oder Grenzwertes zeitlicher Gradienten erfolgt eine Türschließung. Hierfür sorgt die Steuereinheit. Bei dem Sensor als solchen kann es sich um einen Temperatursensor handeln. Grundsätzlich können auch mehrere Sicherheitsschränke an eine gemeinsame Steuereinheit angeschlossen werden.

Der weitere Stand der Technik nach der US 2013/0181829 A1 beschäftigt sich mit einer Vorrichtung zum Messen und Verarbeiten wechselnder Flüssigkeitsspiegel in Flüssigkeitstanks. Dazu ist ein Sensor inklusive Sende-/Empfangseinheit und Energiequelle vorgesehen. Die Anbringung erfolgt dabei schraubend in einer Einschrauböffnung des Tanks.

Beim nächstkommenden und die Gattung bildenden Stand der Technik nach der US 2009/0109040 A1 geht es um ein System zur Informationsübermittlung und dem Bericht über eine radioaktive Quelle. Dazu ist ein entsprechender Sensor vorgesehen. Außerdem ist die Vorrichtung in der Lage, den Ort eines die radioaktive Quelle enthaltenen Containers anzugeben. Außerdem wird eine entsprechende Mitteilung an eine zentrale Stelle abgegeben.

Der Stand der Technik hat sich grundsätzlich bewährt, bietet allerdings noch Raum für Verbesserungen. So ist der Sensor an die Steuereinheit angeschlossen und wird über diese mit der erforderlichen elektrischen Energie versorgt. Das führt zu einer unter Umständen aufwendigen Verkabelung und Datenübertragung. Eine solche Vorgehensweise ist beim Stand der Technik akzeptabel, weil die Gefahrgüter in jeweils Sicherheitsschränken aufgenommen werden und der betreffende Sensor in dem Sicherheitsschrank angeordnet wird. Für eine gleichsam fliegende Überwachung des betreffenden Gefahrgutes an einem mehr oder minder offenen Lagerort ist eine solche Vorgehensweise allerdings nicht geeignet. Hier will die Erfindung insgesamt Abhilfe schaffen.

Der Erfindung liegt das technische Problem zugrunde, eine derartige Vorrichtung und ein zugehöriges Verfahren zur Überwachung zumindest eines Lagerortes zur Aufbewahrung einer oder mehrerer Gefahrgüter so weiterzuentwickeln, dass unterschiedliche Gefahrgüter in wechselnder Zusammensetzung einfach und schnell überwacht werden können.

Zur Lösung dieser technischen Problemstellung ist eine gattungsgemäße Vorrichtung im Rahmen der Erfindung dadurch gekennzeichnet, dass das Anbaumodul lösbar mittels einer Folie mit dem zu überwachenden Gefahrgut verbunden ist, weil die Folie als mikrostrukturierte Silikonfolie mit mehreren 1000 Haftelementen pro cm² ausgebildet ist.

Im Rahmen der Erfindung handelt es sich bei dem Sensor folglich um einen autarken Knotenpunkt in einem lokalen drahtlosen Netzwerk, einen sogenannten "Hub". D. h., bei dem Sensor handelt es sich insgesamt um ein Gerät, welches als Netzwerknoten in einem drahtlosen Telekommunikationsnetzwerk zum Einsatz kommt und entsprechend ausgebildet ist. Zu diesem Zweck ist der Sensor zumindest mit einer Sende-/Empfangseinheit ausgerüstet, um beispielsweise mit einer zentralen Steuereinheit oder einem Router als Hub Signale in beiden Richtungen austauschen zu können, und zwar drahtlos.

Der auf diese Weise gebildete autarke Knotenpunkt kann dabei mit einer externen Energiequelle verbunden sein, beispielsweise mit dem elektrischen Leitungsnetzwerk. Erfindungsgemäß definiert der Sensor jedoch zusammen mit der zugehörigen gleichsam internen Energiequelle den fraglichen autarken Knotenpunkt. In diesem Fall ist der Sensor neben der zuvor bereits angesprochenen Sende-/Empfangseinheit zusätzlich noch mit der eigenen Energiequelle ausgerüstet, beispielsweise einem Akkumulator, einer Batterie, einem Kondensator etc.

Die einzelnen autarken Knotenpunkte bzw. Netzwerkknoten in dem drahtlosen lokalen Netzwerk sind dabei sternförmig miteinander verbunden. Hierdurch wird insgesamt das lokale drahtlose Netzwerk ausgebildet, dessen Reichweite typischerweise auf 100 m oder mehrere 100 m begrenzt ist. Dabei wird meistens auf eine Kurzstrecken-Kommunikation im Gigaherzbereich zurückgegriffen, im Allgemeinen im lizenzfreien ISM-Band (Industrial, Sientific and Medical Bond), welches zwischen 2,402 GHz und 2,480 GHz angesiedelt ist.

Die grundsätzliche Architektur ist so aufgebaut, das sowohl Punkt-zu-Punkt-Verbindungen als auch Punkt-zu-Merkpunktverbindungen umgesetzt werden können. Meistens erfolgt dies im Sinne einer Master-/Slave-Verbindung, wobei der Master bzw. Router (Host) die Verbindung initiiert und die einzelnen als autarker Knotenpunkt ausgebildeten Sensoren die jeweiligen Slaves darstellen. Dementsprechend ist der Master bzw. Router in der Lage, an die einzelnen Slaves bzw. Sensoren Daten senden und von diesen empfangen zu können. Demgegenüber erfolgt der Datenaustausch von den Slaves bzw. Sensoren zum Master hin typischerweise in einer Richtung derart, dass die Slaves an den Master Daten senden und von ihm empfangen. Eine Kommunikation einzelner Slaves bzw. Sensoren untereinander ist dagegen in der Regel nicht vorgesehen.

Auf diese Weise stellt der Sensor inklusive zugehöriger Sende-/Empfangseinheit sowie gegebenenfalls korrespondierender Energiequelle den autarken Knotenpunkt in dem lokalen drahtlosen Netzwerk zur Verfügung. Die einzelnen Sensoren können dabei mit dem Master bzw. Router (Host) Daten austauschen und insbesondere Sensorsignale an diesen übermitteln. Dagegen ist ein Datenaustausch zwischen den einzelnen Sensoren im Allgemeinen nicht vorgesehen. Dabei wird darüber hinaus und vorteilhaft noch so vorgegangen, dass einzelne oder sämtliche Netzwerkteilnehmer des zuvor bereits angesprochenen lokalen drahtlosen Netzwerkes über einen Funk-Standard wie beispielsweise Bluetooth miteinander verbunden sind.

Ferner ist die Auslegung vorteilhaft noch so getroffen, dass das lokale Netzwerk über wenigstens eine Schnittstelle mit einem weltweiten Netzwerk, beispielsweise dem Internet, verbunden ist. In diesem Fall ist der Router bzw. Host oder Master des lokalen drahtlosen Netzwerkes zugleich als Gateway für das weltweite Netzwerk ausgebildet oder weist ein solches Gateway in Gestalt der Schnittstelle auf.

Die zuvor bereits angesprochene Schnittstelle in dem lokalen drahtlosen Netzwerk bzw. dem Host ist dabei vorzugsweise wetterfest ausgebildet. Gleiches gilt für den Host. Auch der einzelne autarke Knotenpunkt in dem lokalen drahtlosen Netzwerk ist in der Regel als vorzugsweise wetterfestes Anbaumodul ausgebildet. Als Folge hiervon können sowohl der Host inklusive Schnittstelle als Gateway zum weltweiten Netzwerk ebenso wie die einzelnen Sensoren bzw. Anbaumodule problemlos auch im Außenbereich, beispielsweise auf einem Parkplatz, einer Abstellfläche, im Innern einer Lagerhalle etc. platziert werden. Durch die einzelnen als autarke Knotenpunkte ausgebildeten Sensoren wird auf diese Weise zugleich der Lagerort definiert. Denn die am Lagerort befindlichen einen oder mehreren Gefahrgüter werden mit dem betreffenden Anbaumodul ausgerüstet, welches seinerseits den zugehörigen autarken Knotenpunkt in dem fraglichen Netzwerk definiert.

Darüber hinaus ist die Auslegung meistens so getroffen, dass der autarke Knotenpunkt mit dem Host bzw. Router (Master) überwiegend Sensorsignale austauscht bzw. an diesen übermittelt. Diese Sensorsignale werden im Allgemeinen mit Produkt- und Ortsinformationen zum betreffenden und jeweils überwachten Gefahrgut verknüpft. Die betreffenden Produkt- und Ortsinformationen können dabei einzeln oder gemeinsam ebenfalls von dem Sensor bzw. dem Anbaumodul an die Steuereinheit transferiert werden. Im Regelfall ist die Auslegung jedoch so getroffen, dass die Steuereinheit über die zugehörigen Produkt- und Ortsinformationen verfügt und diese mit den Sensorsignalen verknüpft.

Die Steuereinheit stellt dabei regelmäßig einen Bestandteil des weltweiten Netzwerkes dar oder ist mit diesem verbunden. Über die bereits angesprochene Schnittstelle bzw. das Gateway erfolgt nun der Datenaustausch zwischen dem lokalen drahtlosen Netzwerk einerseits und dem weltweiten Netzwerk und damit der Steuereinheit andererseits.

Bei den Produkt- bzw. Ortsinformationen handelt es sich um Informationen, die das mit dem betreffenden Sensor ausgerüstete Produkt identifizieren. Hierbei mag es sich um beispielsweise eine Seriennummer einer zugehörigen Batterie, eines mit der Batterie ausgerüsteten Gerätes, die Fahrgestellnummer bei einem Kraftfahrzeug etc. handeln. Die Produktinformation mag dabei mit weiteren Daten beispielsweise zum Alter, der Anzahl der Ladezyklen im Falle von Batterien, der Kapazität etc. flankiert sein, die in der Steuereinheit hinterlegt sind bzw. von der Steuereinheit zur Verfügung gestellt werden können und dann mit den zum Produkt gehörigen Sensorsignalen verknüpft werden. Dazu ist es lediglich noch erforderlich, dass der Sensor bzw. das Anbaumodul mit dem zu überwachenden Gefahrgut, beispielsweise der einen oder den mehreren Batterien, verknüpft wird. Das kann beispielsweise derart geschehen, dass der Sensor bzw. das Anbaumodul eine eigene Kodierung aufweist, die mit der Produktinformation bzw. der bereits angesprochenen Seriennummer verknüpft und in der Steuereinheit hinterlegt wird.

Die Produktinformation und die Sensorsignale können darüber hinaus in der Steuereinheit mit einer Ortsinformation verknüpft werden. Die Ortsinformation kann dabei von der Steuereinheit zur Verfügung gestellt werden, indem zuvor der Ort des Gefahrgutes identifiziert wird. Es ist aber auch möglich, dass beispielsweise der Sensor bzw. das an dieser Stelle realisierte Anbaumodul mit einem zugehörigen GPS-Sensor (Global Positioning System) ausgerüstet ist und auf diese Weise die erforderlichen Ortsinformationen zusammen mit den Sensorsignalen an die Steuereinheit übermittelt und dort mit den Produktinformationen verknüpft werden. So oder so stehen in der Steuereinheit umfassende Informationen über das jeweilige und zu überwachende Gefahrgut zur Verfügung und werden diese Informationen mit entsprechenden Sensorsignalen verknüpft. Diese stammen von dem Sensor, welcher an dem betreffenden Gefahrgut in der Regel angebracht wird und den autarken Knotenpunkt bzw. das an dieser Stelle erfindungsgemäß wetterfest ausgelegt Anbaumodul definiert.

Dabei wird darüber hinaus und erfindungsgemäß so vorgegangen, dass der autarke Knotenpunkt bzw. das betreffende Anbaumodul lösbar mit dem zu überwachenden Gefahrgut verbunden ist. Zur lösbaren Verbindung des autarken Knotenpunktes mit dem Gefahrgut wird dabei auf die mikrostrukturierte Silikonfolie zurückgegriffen.

Die Silikonfolie ist zu diesem Zweck mit mehreren 1000 Haftelementen pro cm² ausgerüstet. Außerdem haftet die Folie in der Regel durch van-der-Waals-Anziehungskräfte am Gefahrgut, und zwar lösbar. Hier haben sich besonders sogenannte "Gecko-Folien" als besonders günstig und praxisgerecht erwiesen.

Auf diese Weise kann das Anbaumodul bzw. der Sensor inklusive Sende-/Empfangseinheit und optionaler eigener Energiequelle mithilfe der fraglichen Folie problemlos und lösbar an dem zu überwachenden Gefahrgut festgelegt werden. In Verbindung mit einem zugehörigen Host bzw. Master kann auf diese Weise ein lokales drahtloses Netzwerk aufgebaut werden, welches durch seine Ausdehnung den zumindest einen Lagerort zur Aufbewahrung des betreffenden Gefahrgutes definiert. Dabei kann der Lagerort zusätzlich noch durch weitere topologische Abgrenzungsmaßnahmen beschrieben werden, beispielsweise durch eine Umzäunung, eine Einhausung, eine Markierung etc.

Sobald auf diese Weise das lokale drahtlose Netzwerk aufgebaut ist, können das eine oder können die mehreren Gefahrgüter über die Steuereinheit überwacht werden, welche ihrerseits über die Schnittstelle bzw. das Gateway mit dem lokalen drahtlosen Netzwerk verbunden ist. Selbstverständlich kann die Steuereinheit auch als Bestandteil des lokalen drahtlosen Netzwerkes ausgelegt sein. In diesem Fall mag die Steuereinheit zugleich als Host bzw. Router oder Master ausgebildet werden. Im Regelfall findet sich die Steuereinheit jedoch örtlich entfernt von dem lokalen drahtlosen Netzwerk, sodass die Datenübermittlung zwischen dem fraglichen Netzwerk und der meistens in das weltweite Netzwerk eingebundenen Steuereinheit über die Schnittstelle bzw. das Gateway erfolgt.

In diesem Zusammenhang wird darüber hinaus noch so vorgegangen, dass mehrere autarke Knotenpunkte matrixartig angeordnet werden können, sodass die zugehörige Ortsinformation zu einer Matrixposition korrespondiert. In diesem Fall ist folglich ein GPS-Sensor als Bestandteil des Anbaumoduls entbehrlich. Auch eine anderweitige Ortsinformation kann hierdurch vermieden werden. Vielmehr wird das betreffende Gefahrgut an einer bestimmten Matrixposition innerhalb des Lagerortes platziert und auf diese Weise mit der gewünschten Ortsinformation ausgerüstet.

Diese Ortsinformation ist insofern von Bedeutung und wesentlich, als die Steuereinheit hierüber beispielsweise Auskunft im Hinblick auf etwaige abnormale Temperaturerhöhungen an dem betreffenden Gefahrgut erhält und diese mit der Ortsinformation verknüpft. Dadurch lässt sich beispielsweise Bedienpersonal gezielt über den Aufenthaltsort des möglicherweise selbst entzündlichen Gefahrgutes informieren, damit entsprechende Gegenmaßnahmen vorgenommen werden können. Beispielsweise ist es denkbar, dass das Bedienpersonal das Gefahrgut thermisch isoliert, entsprechende Löschmaßnahmen einleitet etc.

Nach weiterer vorteilhafter Ausgestaltung kann der Sensor bzw. das Anbaumodul an einem Gehäuse des Gefahrgutes angeordnet werden. In diesem Fall fungiert das Gehäuse im Falle eines Temperatursensors als Sensor als Wärmeleiter. Grundsätzlich kann der Sensor aber auch in einer Revisionsbohrung des Gehäuses untergebracht werden, wenn das Gehäuse selbst eine schlechte Wärmeleitung aufweist, wie dies beispielsweise bei Kunststoffgehäusen der Fall ist. Grundsätzlich kann der Sensor aber auch in einem dem Gefahrgut zugeordneten Kühlkreislauf angeordnet werden, dessen Temperatur Rückschlüsse auf die Temperatur im oder am Gefahrgut zur Verfügung stellt.

Bei dem Sensor kann es sich ganz grundsätzlich um praktisch jedweden denkbaren Sensor zur Überwachung von Gefahrgut handeln. Beispielsweise kann der Sensor als Temperatursensor, Rauchsensor, Gassensor, Dampfsensor, Füllstandssensor oder Leckagesensor ausgebildet sein. Auch ein Schließsensor oder Türzustandssensor ist denkbar, wenn sich das Gefahrgut beispielsweise in einem Sicherheitsschrank befindet. Die zuvor genannten Sensoren können einzeln oder in Kombination zur Anwendung kommen.

Im Ergebnis wird eine Vorrichtung zur Überwachung zumindest eines Lagerortes zur Aufbewahrung einer oder mehrerer Gefahrgüter zur Verfügung gestellt und erstmals realisiert und umgesetzt, mit deren Hilfe eine gleichsam flexible (und fliegende) Definition des Lagerortes ebenso wie eine wirksame Überwachung des betreffenden Gefahrgutes möglich ist. Denn der Lagerort wird im Endeffekt durch den als autarker Knotenpunkt in einem lokalen drahtlosen Netzwerk ausgebildeten Sensor inklusive zugehörigem Host bzw. Master im Minimum definiert.

In der Regel sind mehrere als jeweils autarker Knotenpunkt ausgebildete Sensoren vorgesehen, die drahtlos mit dem betreffenden Host kommunizieren. Der Sensor bzw. ein an dieser Stelle vorgesehenes Anbaumodul verfügt zu diesem Zweck zumindest über eine Sende-/Empfangseinheit, um den erforderlichen Datenverkehr zwischen dem Sensor und dem Host bzw. Master aufrechterhalten zu können. Nach vorteilhafter Ausgestaltung ist der Sensor zusätzlich noch mit einer eigenen Energiequelle, beispielsweise einer Batterie oder einem Kondensator ausgerüstet.

Dadurch können der Sensor inklusive Sende-/Empfangseinheit und optionaler Energiequelle insgesamt das bereits angesprochene Anbaumodul definieren und beschreiben, welches seinerseits lösbar an dem zu überwachenden Gefahrgut festgelegt wird. Das geschieht in der Regel unter Rückgriff auf eine sogenannte "Gecko-Folie". Dadurch lässt sich das betreffende Anbaumodul nicht nur lösbar, sondern auch rückstandsfrei und beschädigungsfrei an dem jeweiligen Gefahrgut festlegen. - Gegenstand der Erfindung ist auch ein zugehöriges Verfahren zur Überwachung des betreffenden Lagerortes zur Aufbewahrung einer oder mehrerer Gefahrgüter, wie es im Anspruch 15 im Detail beschrieben wird. Hierin sind die wesentlichen Vorteile zu sehen.

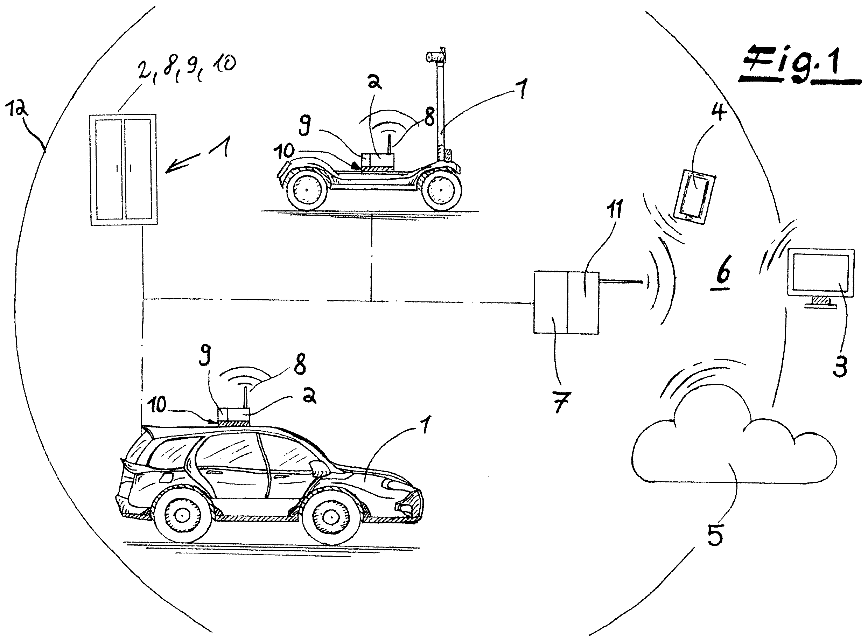

Nachfolgend wird die Erfindung anhand einer lediglich ein Ausführungsbeispiel darstellenden Zeichnung näher erläutert; die einzige Fig. 1 zeigt eine Vorrichtung zur Überwachung zumindest eines Lagerortes zur Aufbewahrung einer oder mehrerer Gefahrgüter.

In der einzigen Fig. 1 ist eine Vorrichtung dargestellt, mit deren Hilfe ein dort wiedergegebener Lagerort 12 überwacht werden kann. Der Lagerort 12 dient zur Aufbewahrung einer oder mehrerer Gefahrgüter 1. Bei den Gefahrgütern 1 handelt es sich nach dem Ausführungsbeispiel um Batterien respektive mit Batterien ausgerüstete Gegenstände, beispielsweise einzelne in der Fig. 1 angedeutete Elektroautomobile und Elektroroller oder auch einen Sicherheitsschrank, der in seinem Innern solche Batterien aufnimmt. Das gilt selbstverständlich nur beispielhaft und ist keinesfalls zwingend. Dazu wird das betreffende Gefahrgut 1 mit wenigstens einem zugeordneten Sensor 2 ausgerüstet. Der Sensor 2 ist zu diesem Zweck lösbar an dem betreffenden Gefahrgut 1 angebracht. Dazu wird der Sensor 2 beispielsweise mithilfe einer mikrostrukturierten Silikonfolie 10 lösbar festgelegt. Die Festlegung der Folie bzw. Silikonfolie 10 erfolgt dabei über Van-der-Waals Anziehungskräfte unter Rückgriff auf die mikrostrukturierte Silikonfolie 10 mit mehr als 1000 Haftelementen pro cm².

Mithilfe des Sensors 2 werden insgesamt Sensorsignale an eine Steuereinheit 3, 4, 5 übermittelt. Die Steuereinheit 3, 4, 5 setzt sich nach dem Ausführungsbeispiel aus wenigstens einem Computer 3, einer drahtlosen Steuereinheit 4, beispielsweise einem Smartphone und schließlich einem Speicher 5 in Gestalt beispielsweise eines Cloud-Speichers innerhalb eines weltweiten Netzwerkes 6, beispielsweise des Internets, zusammen. Selbstverständlich kann auch nur mit dem Computer 3 als Steuereinheit gearbeitet werden.

Einzelne Sensorsignale der Sensoren 2 werden dabei an einen Host bzw. Master 7 übermittelt. Dazu verfügen die einzelnen Sensoren 2 über jeweils zugehörige Sende-/Empfangseinheiten 8. Außerdem ist nach dem Ausführungsbeispiel noch eine zugehörige Energiequelle 9 in Gestalt beispielsweise eines Akkumulators, eines Kondensatoren oder von Kombinationen realisiert. Auf diese Weise sind die Sensoren 2 insgesamt als Anbaumodul 2, 8, 9 ausgebildet, wobei das Anbaumodul 2, 8, 9 nach dem Ausführungsbeispiel unter Zwischenschaltung der zuvor bereits angesprochenen Folie 10 lösbar an dem betreffenden Gefahrgut 1 festgelegt wird.

Anhand der Darstellung in der Fig. 1 erkennt man zusätzlich noch, dass der Host bzw. Master 7 mit einer Schnittstelle 11 ausgerüstet ist, um als gleichsam Gateway das lokale Netzwerk zum weltweiten Netzwerk 6 hin zu öffnen und die Datenverbindung zu der Steuereinheit 3, 4, 5 herstellen zu können. Die einzelnen Sensoren 2 bzw. Anbaumodule 2, 8, 9 kommunizieren dabei jeweils bidirektional mit dem Host bzw. Master 7, und zwar drahtlos. Auf diese Weise wird insgesamt ein lokales drahtloses Netzwerk 2, 8, 9; 7 ausgebildet. Die in der Fig. 1 angedeuteten Verbindungen in Gestalt von strichpunktierten Linien sind also jeweils als drahtlose Verbindungen ausgebildet.

Da die einzelne Netzwerkteilnehmer 2, 8, 9; 7 des drahtlosen Netzwerkes 2, 8, 9; 7 über einen Funkstandard wie beispielsweise Bluetooth miteinander verbunden sind, wird zugleich der Lagerort 12 definiert. Denn die Reichweite des gesamten Funk-Standards beträgt nach dem Ausführungsbeispiel in der Regel weniger als 100 m. D. h., die einzelnen Sensoren bzw. Anbaumodule 2, 8, 9 befinden sich in der Regel innerhalb eines in der Fig. 1 angedeuteten Radius von weniger als 100 m um den Host 7 als Mittelpunkt. Dadurch wird insgesamt der Lagerort 12 zur Aufbewahrung des einen oder der mehreren Gefahrgüter 1 definiert und vorgegeben. Selbstverständlich kann zur Definition des Lagerortes 12 zusätzlich auch noch auf örtliche Barrieren, Markierungen etc. zurückgegriffen werden.

Sowohl das Anbaumodul 2, 8, 9 als auch die Schnittstelle 11 sowie der Horst 7 sind in der Regel wetterfest ausgebildet, sodass der Lagerort 12 auch im Außenbereich vorgesehen werden kann, beispielsweise auf einer Freifläche, im Innern einer Halle usw. So oder so ist die Auslegung typischerweise so getroffen, dass die einzelnen Anbaumodule 2, 8, 9 bzw. die zugehörigen Sensoren 2 jeweils bidirektional mit dem Host 7 drahtlos kommunizieren können, wie dies durch einzelne Verbindungsleitungen angedeutet ist. Dagegen ist eine Kommunikation der einzelnen Sensoren 2 bzw. der Anbaumodule 2, 8, 9 untereinander nicht vorgesehen.

Die einzelnen Anbaumodule 2, 8, 9 bzw. die Sensoren 2 definieren folglich autarke Knotenpunkte in dem lokalen drahtlosen Netzwerk 2, 8, 9; 7. Außerdem können die einzelnen autarken Knotenpunkte matrixartig angeordnet werden. Auf diese Weise kann über die Matrixposition eine Ortsinformation über den Aufenthaltsort des betreffenden Gefahrgutes 1 erzeugt werden. Grundsätzlich kann die Ortsinformation aber auch aus beispielsweise Signalen eines GPS-Sensors als Bestandteil des Anbaumoduls 2, 8, 9 abgeleitet werden, was nicht dargestellt ist.

So oder so lässt sich die Ortsinformation mit zusätzlichen Produktinformationen über das Gefahrgut 1 beispielsweise in der Steuereinheit 3, 4, 5 verknüpfen und auch mit zugehörigen Sensorsignalen des an dem betreffenden Gefahrgut 1 angebrachten Sensors 2. Dadurch wird beispielsweise ein Bediener am Computer 3 umfassend über das Gefahrgut 1 informiert, und zwar hinsichtlich seines Aufenthaltsortes am Lagerort 12, im Hinblick auf etwaige zusätzliche Produktinformationen, die einleitend bereits beschrieben worden sind und zugleich über Sensorsignale des zugehörigen Sensors 2.

Dazu mag der Sensor 2 bzw. das Anbaumodul 2, 8, 9 an einem Gehäuse des Gefahrgutes 1 in einer Revisionsbohrung oder einem dem Gefahrgut 1 zugeordneten Kühlkreislauf angeordnet werden. Bei dem Sensor 2 kann es sich nicht einschränkend um einen Temperatursensor, einen Rauchsensor, einen Gassensor, einen Dampfsensor, einen Leckagesensor etc. handelt. Auch Kombinationen sind denkbar. Sofern das Gefahrgut 1 in einem Sicherheitsschrank aufbewahrt wird, kann zusätzlich auch der Türzustand mithilfe des Sensors 2 abgefragt werden. Auch eine Füllstandsabfrage mithilfe des Sensors 2 ist möglich.

## Patentansprüche

1. Vorrichtung zur Überwachung zumindest eines Lagerortes (12) zur Aufbewahrung einer oder mehrerer Gefahrgüter (1), wie beispielsweise Chemikalien oder Verbrauchsgüter und insbesondere zur Aufbewahrung von Batterien und mit Batterien ausgerüsteten Gegenständen wie beispielsweise Fahrzeugen, wobei
das Gefahrgut (1) mit wenigstens einem zugeordneten Sensor (2) ausgerüstet ist und entsprechende Sensorsignale an eine Steuereinheit (3, 4, 5) drahtlos übermittelt werden, und wobei
der Sensor (2) inklusive zugehöriger Sende-/Empfangseinheit (8) zusammen mit einer korrespondierenden Energiequelle (9) als das Gefahrgut (1) identifizierender autarker und als wetterfestes Anbaumodul (2, 8, 9) ausgelegter Knotenpunkt in einem lokalen drahtlosen Netzwerk (2, 8, 9; 7) ausgebildet ist,
**dadurch gekennzeichnet, dass**
das Anbaumodul (2, 8, 9) lösbar mittels einer Folie (10) mit dem zu überwachenden Gefahrgut (1) verbunden ist, wobei
die Folie (10) als mikrostrukturierte Silikonfolie mit mehreren 1000 Haftelementen pro cm² ausgebildet ist.

2. Vorrichtung nach Anspruch 1, **dadurch gekennzeichnet, dass** einzelne Netzwerkteilnehmer des drahtlosen Netzwerkes (2, 8, 9; 7) über einen Funkstandard wie beispielsweise Bluetooth miteinander verbunden sind.

3. Vorrichtung nach Anspruch 1 oder 2, **dadurch gekennzeichnet, dass** das lokale Netzwerk (2, 8, 9; 7) über wenigstens eine Schnittstelle (11) mit einem weltweiten Netzwerk, beispielsweise dem Internet (6), verbunden ist.

4. Vorrichtung nach Anspruch 3, **dadurch gekennzeichnet, dass** die Schnittstelle (11) wetterfest ausgebildet ist.

5. Vorrichtung nach Anspruch 3 oder 4, **dadurch gekennzeichnet, dass** die Steuereinheit (3, 4, 5) einen Bestandteil des weltweiten Netzwerkes darstellt oder mit diesem verbunden ist.

6. Vorrichtung nach einem der Ansprüche 1 bis 5,
**dadurch gekennzeichnet,**
**dass** die Steuereinheit (3, 4, 5) die Sensorsignale mit Produkt- und Ortsinformationen des betreffenden Gefahrgutes verknüpft.

7. Vorrichtung nach einem der Ansprüche 1 bis 6,
**dadurch gekennzeichnet,**
**dass** die Folie (10) durch van-der-Waals-Anziehungskräfte am Gefahrgut (1) lösbar haftet.

8. Vorrichtung nach einem der Ansprüche 1 bis 7,
**dadurch gekennzeichnet,**
**dass** mehrere autarke Knotenpunkte matrixartig angeordnet sind, sodass die zugehörige Ortsinformation zu einer Matrixposition korrespondiert.

9. Vorrichtung nach einem der Ansprüche 1 bis 8,
**dadurch gekennzeichnet,**
**dass** der Sensor (2) an einem Gehäuse des Gefahrgutes (1), in einer Revisionsbohrung des Gehäuses, einen dem Gefahrgut (1) zugeordneten Kühlkreislauf angeordnet ist.

10. Vorrichtung nach einem der Ansprüche 1 bis 9,
**dadurch gekennzeichnet,**
**dass** der Sensor (2) als Temperatursensor, Rauch-, Gas-, Dampfsensor, Türzustandssensor, Füllstands- oder Leckagesensor einzeln oder in Kombination ausgebildet ist.

11. Verfahren zur Überwachung zumindest eines Lagerortes (12) zur Aufbewahrung einer oder mehrerer Gefahrgüter (1) wie beispielsweise Chemikalien, Verbrauchsgüter und insbesondere von Batterien und mit Batterien ausgerüsteten Gegenständen wie beispielsweise Fahrzeugen, wonach
das Gefahrgut (1) mit wenigstens einem Sensor (2) ausgerüstet wird und entsprechende Sensorsignale an eine Steuereinheit (3, 4, 5) drahtlos übermittelt werden, und wonach
der Sensor (2) inklusive zugehöriger Sende-/Empfangseinheit (8) zusammen mit einer korrespondierenden Energiequelle (9) als das Gefahrgut (1) identifizierender autarker und als wetterfestes Anbaumodul (2, 8, 9) ausgelegter Knotenpunkt in einem lokalen drahtlosen Netzwerk (2, 8, 9; 7) ausgebildet wird,
**dadurch gekennzeichnet, dass**
das Anbaumodul (2, 8, 9) lösbar mittels einer Folie (10) mit dem zu überwachenden Gefahrgut (1) verbunden wird, wobei
die Folie (10) als mikrostrukturierte Silikonfolie mit mehreren 1000 Haftelementen pro cm² ausgebildet ist.

## Claims

1. A device for monitoring at least one storage location (12) for storing one or more hazardous materials (1) such as, for example, chemicals or consumables, and in particular for storing batteries and items equipped with batteries such as, for example, vehicles, wherein
the hazardous material (1) is equipped with at least one associated sensor (2), and corresponding sensor signals are transmitted wirelessly to a control unit (3, 4, 5), and wherein
the sensor (2) including an associated transmitter/receiver unit (8), together with a corresponding power source (9), is designed as an autonomous node identifying the hazardous materials (1) and configured as weatherproof add-on module (2, 8, 9) within a local wireless network (2, 8, 9; 7),
**characterised in that**
the add-on module (2, 8, 9) is detachably connected by means of a film (10) to the hazardous material (1) to be monitored, wherein
the film (10) is designed as a microstructured silicone film with several 1,000 adhesive elements per cm².

2. The device according to claim 1, **characterised in that** individual network participants of the wireless network (2, 8, 9; 7) are connected to one another via a wireless standard such as, for example, Bluetooth.

3. The device according to claim 1 or 2, **characterised in that** the local network (2, 8, 9; 7) is connected to a global network, for example the Internet (6), via at least one interface (11).

4. The device according to claim 3, **characterised in that** the interface (11) is designed to be weatherproof.

5. The device according to claim 3 or 4, **characterised in that** the control unit (3, 4, 5) represents part of the global network or is connected thereto.

6. The device according to any one of claims 1 to 5, **characterised in that** the control unit (3, 4, 5) links the sensor signals with product and location information relating to the hazardous material in question.

7. The device according to any one of claims 1 to 6, **characterised in that** the film (10) adheres detachably to the hazardous material (1) by means of van der Waals forces of attraction.

8. The device according to any one of claims 1 to 7, **characterised in that** multiple autonomous nodes are arranged in a matrix-like manner such that the associated location information corresponds to a matrix position.

9. The device according to any one of claims 1 to 8, **characterised in that** the sensor (2) is arranged on a housing of the hazardous material (1), within an inspection bore in the housing, in a cooling circuit associated with the hazardous material (1).

10. The device according to any one of claims 1 to 9, **characterised in that** the sensor (2) is designed as a temperature sensor, smoke sensor, gas sensor, vapour sensor, door status sensor, level sensor or leakage sensor, either individually or in combination.

11. A method for monitoring at least one storage location (12) for storing one or more hazardous materials (1) such as, for example, chemicals, consumables and, in particular, batteries, and items equipped with batteries such as, for example, vehicles, wherein
the hazardous materials (1) is equipped with at least one sensor (2), and corresponding sensor signals are transmitted wirelessly to a control unit (3, 4, 5), and wherein
the sensor (2) including the associated transmitter/receiver unit (8), together with a corresponding power source (9), is designed as an autonomous node identifying the hazardous materials (1) and configured as weatherproof add-on module (2, 8, 9) within a local wireless network (2, 8, 9; 7),
**characterised in that**
the add-on module (2, 8, 9) is detachably connected by means of a film (10) to the hazardous material (1) to be monitored, wherein
the film (10) is designed as a microstructured silicone film with several 1,000 adhesive elements per cm².

## Revendications

1. Dispositif de contrôle d'au moins un lieu d'entreposage (12) pour la conservation d'une ou de plusieurs marchandises dangereuses (1), comme par exemple des produits chimiques ou des biens de consommation et en particulier pour la conservation de batteries et des objets munis de batteries, comme par exemple des véhicules, sachant que
la marchandise dangereuse (1) est munie au moins d'un détecteur (2) attribué et que des signaux de détection correspondants sont transmis sans fil à une unité de commande (3, 4, 5), et sachant que
le détecteur (2) y compris une unité d'émission/réception s'y rattachant (8) avec une source d'énergie (9) correspondante est constitué en tant que point nodal autonome identifiant la marchandise dangereuse (1) et conçu comme module complémentaire (2, 8, 9) résistant aux intempéries dans un réseau local sans fil (2, 8, 9 ; 7),
**caractérisé en ce que**
le module complémentaire (2, 8, 9) est relié de façon amovible au moyen d'une feuille (10) à la marchandise dangereuse (1) à surveiller, sachant que
la feuille (10) est constituée sous la forme d'une feuille de silicone microstructurée avec plusieurs milliers d'éléments de retenue par cm².

2. Dispositif selon la revendication 1, **caractérisé en ce que** les participants de réseau individuels du réseau sans fil (2, 8, 9 ; 7) sont reliés entre eux par un système standard radio, comme par exemple Bluetooth.

3. Dispositif selon la revendication 1 ou 2, **caractérisé en ce que** le réseau local (2, 8, 9 ; 7) est relié à un réseau mondial, par exemple Internet (6) par au moins une interface (11).

4. Dispositif selon la revendication 3, **caractérisé en ce que** l'interface (11) est constitué résistante aux intempéries.

5. Dispositif selon la revendication 3 ou 4, **caractérisé en ce que** l'unité de commande (3, 4, 5) représente un composant du réseau mondial ou est reliée à celui-ci.

6. Dispositif selon l'une quelconque des revendications 1 à 5, **caractérisé en ce que** l'unité de commande (3, 4, 5) associe les signaux de détection aux informations de produit et de lieu de la marchandise dangereuse concernée.

7. Dispositif selon l'une quelconque des revendications 1 à 6, **caractérisé en ce que** la feuille (10) adhère de façon amovible à la marchandise dangereuse (1) par la force d'attraction de van der Waals.

8. Dispositif selon l'une quelconque des revendications 1 à 7, **caractérisé en ce que** plusieurs points nodaux autonomes sont disposés de façon matricielle de telle manière que l'information locale s'y rattachant correspond à une position matricielle.

9. Dispositif selon l'une quelconque des revendications 1 à 8, **caractérisé en ce que** le capteur (2) est disposé sur un boîtier de la marchandise dangereuse (1), dans un regard de révision du boîtier, un circuit réfrigérant attribué à la marchandise dangereuse (1).

10. Dispositif selon l'une quelconque des revendications 1 à 9, **caractérisé en ce que** le capteur (2) est constitué en tant que capteur de température, détecteur de fumée, de gaz, de vapeur, détecteur d'état de porte, détecteur de niveau de remplissage ou de fuite de façon individuelle ou en combinaison.

11. Procédé de contrôle d'au moins un lieu d'entreposage (12) pour la conservation d'une ou de plusieurs marchandises dangereuses (1), comme par exemple des produits chimiques ou des biens de consommation et en particulier des batteries et des objets munis de batteries, comme par exemple des véhicules, selon lequel
la marchandise dangereuse (1) est munie au moins d'un capteur (2) et des signaux de détection correspondants sont transmis sans fil à une unité de commande (3, 4, 5), et selon lequel
le capteur (2) y compris une unité d'émission/réception s'y rattachant (8) avec une source d'énergie (9) correspondante est constitué en tant que point nodal autonome identifiant la marchandise dangereuse (1) et conçu comme module complémentaire (2, 8, 9) résistant aux intempéries dans un réseau local sans fil (2, 8, 9 ; 7),
**caractérisé en ce que**
le module complémentaire (2, 8, 9) est relié de façon amovible au moyen d'une feuille (10) à la marchandise dangereuse (1) à surveiller, sachant que
la feuille (10) est constituée sous la forme d'une feuille de silicone microstructurée avec plusieurs milliers d'éléments de retenue par cm².
